# EUROPEAN PATENT APPLICATION

(11) **EP 1 752 424 A1**
(43) Date of publication of application: **14.02.2007**
(21) Application number: 06118489.1
(22) Date of filing: 04.08.2006
(51) Int. Cl.: C03B 33/027

(54) **Cutting table for cutting sheets of glass**

(30) Priority: 05.08.2005 IT TO20050557
(71) Applicant: BOTTERO S.p.A., 12010 Cuneo (IT)
(72) Inventor: Giorsetti, Roberto, 12016 Peveragno (IT); Margaria, Pierfranco, 10094 Valgioie (IT)
(74) Representative: Jorio, Paolo

(57) **Abstract**

A cutting table for cutting sheets of glass has a supporting surface for supporting a work sheet of glass; and a movable bridge located over the supporting surface and in turn having two lateral carriages running along respective rails, and an intermediate cross member connecting the lateral carriages; the cross member being fitted with a further movable powered carriage for moving a tool for working the sheet, and having at least one alveolar body with a honeycomb structure.

## Description

The present invention relates to a cutting table for cutting sheets of glass.

More specifically, the present invention relates to a cutting table comprising a supporting surface for supporting the work sheet; and a powered bridge having two lateral shoulders or carriages running both ways along rails parallel to the supporting surface, and an intermediate cross member connected integrally to the shoulders and supporting a carriage fitted to and running both ways along the cross member.

Known bridges must ensure precise movement of the carriage over the supporting surface, and for this reason must be extremely rigid. Known bridges are therefore normally formed by joining - conveniently welding together - metal plates and/or sections to define a practically undeformable structure. Known undeformable structures, however, have the major drawback of being extremely heavy, which limits the increase in the travelling speed of the bridge, and is a serious obstacle to increasing demand for fast acceleration and deceleration to reduce cycle time.

It is an object of the present invention to provide a cutting table designed to provide a straightforward, low-cost solution to the above problems.

According to the present invention, there is provided a cutting table for cutting sheets of glass, comprising a supporting surface for supporting a work sheet of glass; and a movable bridge located over said supporting surface and in turn comprising two lateral carriages running along respective rails, and an intermediate cross member connecting the lateral carriages, the cross member being fitted with a further movable powered carriage for moving a tool for working the sheet; characterized in that at least said cross member comprises at least one alveolar body.

In the table defined above, said alveolar body preferably has a honeycomb structure.

A non-limiting embodiment of the invention will be described by way of example with reference to the accompanying drawings, in which:
Figure 1 shows a partial view in perspective of a preferred embodiment of a cutting table in accordance with the teachings of the present invention;
Figure 2 shows a larger-scale partial view, with parts removed for clarity, of a detail of the Figure 1 table.

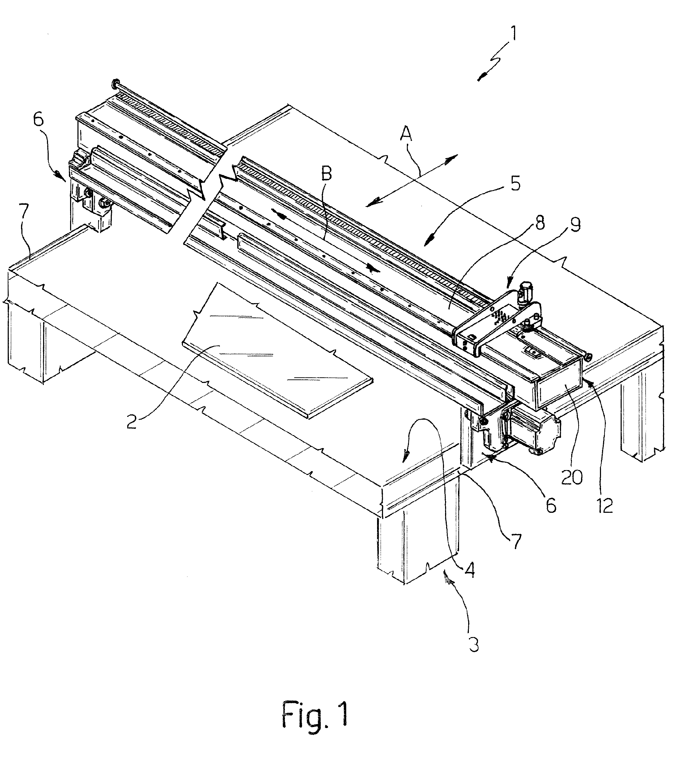

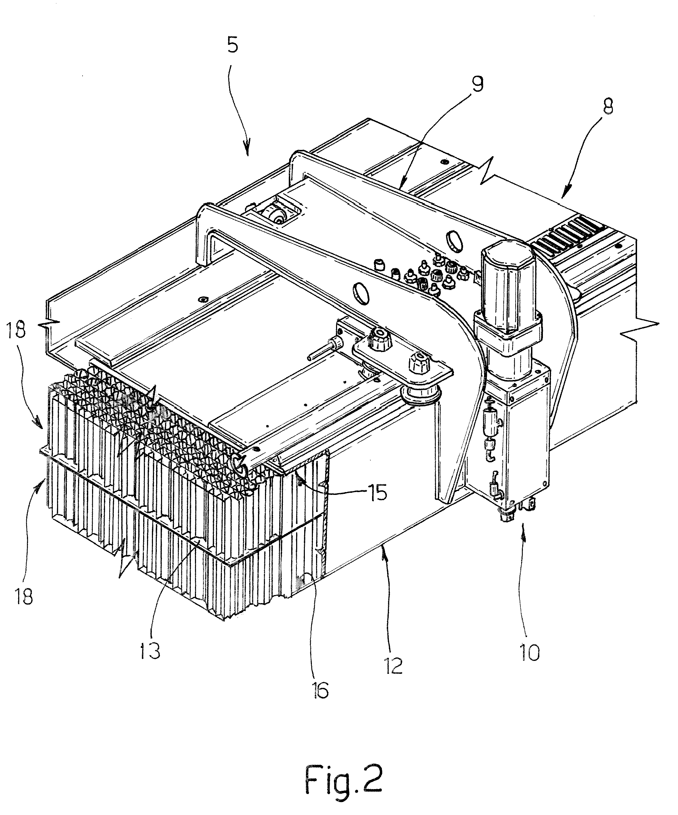

Number 1 in Figure 1 indicates as a whole a cutting table for cutting sheets 2 of glass. Table 1 comprises a frame 3; a supporting surface 4 for supporting the work sheet 2; and a movable bridge 5 fitted in known manner to frame 3 to travel over surface 4 in a direction A. More specifically, bridge 5 comprises two lateral carriages 6 running both ways, parallel to direction A, along respective rails 7; and an intermediate cross member 8 connected integrally at both opposite ends to lateral carriages 6. Intermediate cross member 8 is fitted with a powered carriage 9, which runs both ways along intermediate cross member 8 in a direction B perpendicular to direction A, and which supports a sheet-working tool 10, e.g. a scoring or abrasive tool 10 shown schematically in Figure 2.

With reference to Figure 1 and particularly Figure 2, cross member 8 comprises a quadrangular tubular box body 12, conveniently with a rectangular cross section, made of aluminium alloy and connected integrally to lateral carriages 6. Carriage 9 is fitted to box body 12 as shown in Figure 2. Cross member 8 also comprises a flat partition 13, which is housed inside body 12, extends the whole length of box body 12, parallel to supporting surface 4, and defines, together with box body 12, two superimposed elongated chambers 15 and 16. Each chamber 15, 16 houses an alveolar body 18, which is preferably made of aluminium alloy or composite materials, such as glass or carbon fibre, Kevlar®, and conveniently has a honeycomb structure defining a number of vertical channels or passages perpendicular to the supporting surface. Each alveolar body 18 fills the whole of respective chamber 15, 16, and is connected firmly to the inner surfaces of box body 12 and partition 13 by a layer of adhesive material not shown in the drawings. The opposite ends of box body 12 are closed by respective cover plates 20, only one of which is shown in Figure 1.

Using an alveolar, in particular a honeycomb, body housed inside a box body provides for achieving a bridge that is extremely easy to produce, is much lighter than known bridges, but which at the same time has the same characteristics as known bridges in terms of strength and rigidity, and is fitted with the respective carriage in substantially the same way. The strength and rigidity of bridge 5 described are mainly due to the particular way the alveolar body is positioned with respect to the supporting surface, to the fact that the alveolar body fills the respective chamber completely, and to the fact that the alveolar body is firmly connected to the inside of, and surrounded completely by, the box body.

The exceptional resistance of bridge 5, as described, to external mechanical stress is also due to using two separate, superimposed alveolar bodies, each housed in a respective chamber, and, above all, located on opposite sides of a partition to which they are also firmly connected.

Clearly, changes may be made to table 1 as described herein without, however, departing from the protective scope as defined in the accompanying Claims. In particular, alveolar bodies other than those described may be used, may be positioned differently with respect to the supporting surface, and may be associated with supporting or stiffening bodies other than the box body described by way of example. The alveolar bodies described may also be replaced by an alveolar body formed in one piece and possibly reinforced with a suitable metal or plastic reinforcing structure.

The alveolar bodies may also be associated with lateral carriages 6 to further reduce the weight of the carriage and hence inertia.

## Claims

1. A cutting table for cutting sheets of glass, comprising a supporting surface for supporting a work sheet of glass; and a movable bridge located over said supporting surface and in turn comprising two lateral carriages running along respective rails, and an intermediate cross member connecting the lateral carriages, the cross member being fitted with a further movable powered carriage for moving a tool for working the sheet; **characterized in that** at least said cross member comprises at least one alveolar body.

2. A table as claimed in Claim 1, **characterized in that** said alveolar body has a honeycomb structure.

3. A table as claimed in Claim 2, **characterized in that** said honeycomb structure defines a number of passages or conduits extending perpendicular to said supporting surface.

4. A table as claimed in one of Claims 1 to 3, **characterized in that** said cross member also comprises a box body completely housing said alveolar body.

5. A table as claimed in Claim 4, **characterized in that** said box body also houses a partition defining, together with the box body, two elongated chambers; at least one of said chambers housing said alveolar body.

6. A table as claimed in Claim 5, **characterized in that** said partition extends parallel to said supporting surface.

7. A table as claimed in Claim 5 or 6, **characterized in that** each of said chambers houses a respective said alveolar body.

8. A table as claimed in one of Claims 4 to 7, **characterized in that** said alveolar body fills said box body completely.

9. A table as claimed in one of Claims 4 to 8, **characterized in that** said cross member also comprises connecting means for connecting said alveolar body firmly to said box body.

10. A table as claimed in Claim 9, **characterized in that** said connecting means comprise a layer of adhesive material.

11. A table as claimed in any one of Claims 4 to 10, **characterized in that** said box body is an elongated, rectangular-section, tubular body made of aluminium alloy, and **in that** said alveolar body is made of aluminium alloy or composite material.
